# EUROPEAN PATENT APPLICATION

(11) **EP 4 485 147 A1**
(43) Date of publication of application: **01.01.2025**
(21) Application number: 24185756.4
(22) Date of filing: 01.07.2024
(51) Int. Cl.: G06F 3/01, G06V 10/94, G06V 20/59, G06V 40/18

(54) **PUPIL DYNAMICS, PHYSIOLOGY, AND PERFORMANCE FOR ESTIMATING COMPETENCY IN SITUATIONAL AWARENESS**

(30) Priority: 30.06.2023 US 202318216941
(71) Applicant: Rockwell Collins, Inc., Cedar Rapids, IA 52498 (US)
(72) Inventor: WU, Peggy, Elicott City, MD (US); RADLBECK, Andrew, South Glastonbury, CT (US); BLAKESLEE, Brigid A., Hamden, CT (US); SUNDARAMOORTHI, Ganesh, Duluth, GA (US)
(74) Representative: Dehns

(57) **Abstract**

A computer system records eye tracking data and identifies movements in the eye tracking data to determine gaze and pupil dynamics. Eye tracking data is correlated with known task steps. The system anticipates where the pilot's gaze should be based on the known task steps, and characterizes the pilot response based on a change in gaze. The system produces a pilot situational awareness metric based on the characterization. The system further characterizes the pilot's response based on a delay to switch gaze. Such delays may conform to both minimum and maximum thresholds. The system continuously adjusts and / or weights the situational awareness metric based on ongoing, prospective, gaze monitoring.

## Description

### BACKGROUND

Situation awareness is difficult to measure. Currently, measuring one's situation awareness requires pausing training or simulation exercises, and administering self-report surveys. This process is time consuming, and can take a trainee out of a simulation, affecting the realism of the experience. However, assessing the operator's level of situation awareness in situ is important for assessing their competency and readiness.

In non-training scenarios, pilot monitoring systems may utilize eye tracking to characterize the cognitive state of the pilot. Such systems have limited specificity and sensitivity to characterize the situational awareness of the pilot.

Consequently, it would be advantageous if an improved apparatus existed that is suitable for monitoring situational awareness.

### SUMMARY

In one aspect, there is provided a computer system that records eye tracking data. The system identifies movements in the eye tracking data to determine gaze and pupil dynamics. Eye tracking data is correlated with known task steps. The system anticipates where the pilot's gaze should be based on the known task steps, and characterizes the pilot response based on a change in gaze. The system produces a pilot situational awareness metric based on the characterization.

In embodiments, the system further characterizes the pilot's response based on a delay to switch gaze. Such delays may conform to both minimum and maximum thresholds.

In embodiments, the system continuously adjusts and / or weights the situational awareness metric based on ongoing, prospective, gaze monitoring.

It is to be understood that both the foregoing general description and the following detailed description are exemplary and explanatory only and should not restrict the scope of the invention which is defined by the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a block diagram of a system suitable for implementing embodiments of the incentive concepts disclosed herein;
FIG. 2 shows a flowchart of an exemplary embodiment of the inventive concepts disclosed herein; and
FIG. 3 shows a block diagram of a neural network according an exemplary embodiment of the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways within the scope of the claims. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a' and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a computer system that records eye tracking data. The system identifies movements in the eye tracking data to determine gaze and pupil dynamics. Eye tracking data is correlated with known task steps. The system anticipates where the pilot's gaze should be based on the known task steps, and characterizes the pilot response based on a change in gaze. The system produces a pilot situational awareness metric based on the characterization. The system further characterizes the pilot's response based on a delay to switch gaze. Such delays may conform to both minimum and maximum thresholds. The system continuously adjusts and / or weights the situational awareness metric based on ongoing, prospective, gaze monitoring.

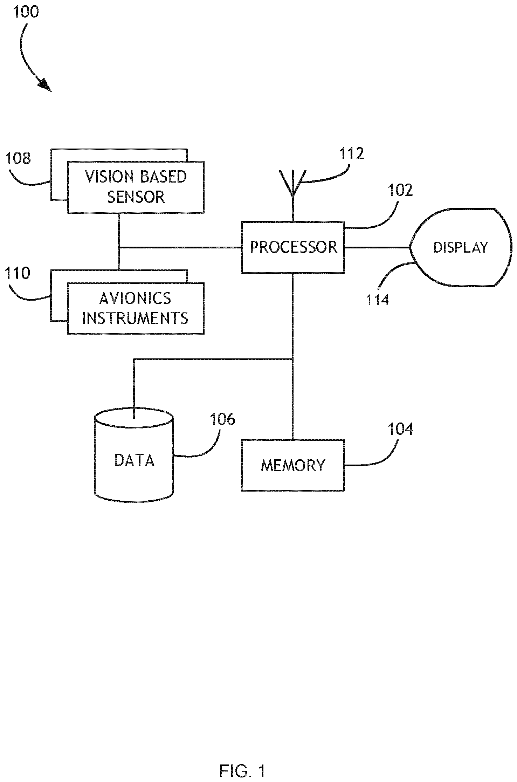

Referring to FIG. 1, a block diagram of a system 100 suitable for implementing embodiments of the incentive concepts disclosed herein is shown. The system 100 includes a processor 102, memory 104 in data communication with the processor 102 for storing processor executable code, and one or more eye tracking sensors / cameras 108 for receiving eye tracking data stream. In at least one embodiment, the eye tracking sensors 108 record eye movement / gaze of a pilot and eye lid position. The processor executable code configures the processor 102 to continuously log the eye tracking data in a data storage element 106. The processor 102 analyzes the eye tracking data to identify gaze and pupil dynamics (e.g., pupil response and changes over time).

In at least one embodiment, eye tracking data are correlated with discreet portions of a training scenario / task that may be defined by a set of steps stored in the data storage element 106. Each step may define metrics that can be characterized via the eye tracking data; for example, each step may define a scan pattern of instruments that the user should observe (as determined by prior user interacts, expert user interactions, or both), and the processor 102 may determine if the user is actually observing those instruments via the eye tracking data. Furthermore, each step may define metrics such as observation time (maximum and minimum thresholds indicating that the user has observed the instruments for an appropriate amount of time) to characterize the comprehension of the user. Also, each step may define subsequent actions that the user may be predicted to take within certain time thresholds; the processor 102 may then prospectively verify those subsequent actions via the eye tracking data. Alternatively, or in addition, the processor 102 may analyze data from avionics instruments or systems 110 to determine actions taken by the user in response to prior steps, and determine subsequent actions that the user may be predicted to take based on those prior actions in real-time; the processor 102 may then prospectively verify those subsequent actions via the eye tracking data.

In at least one embodiment, the processor 102 may receive specific stimuli such as instrument readings, alerts, or the like, and determine whether the eye tracking data correspond to predetermined behaviors of perception, comprehension, and projection. Embodiments of the present disclosure are directed toward identifying behaviors indicative of a predefined gaze and / or scan pattern; behaviors indicative of comprehension based on the information displayed; and behaviors indicative of projection as the user takes actions necessary for future steps in a process. For example, for some stimuli (e.g., an alert message), a user should anticipate a need for certain information from the available instruments at some point in the future. The processor 102 may determine if the user begins shifting gaze to those instruments within some threshold time.

In at least one embodiment, the processor 102 may compare the eye tracking data to stored profiles. Such profiles may be specific to the user and indicate a user specific minimum threshold. The processor 102 may store current responses and adjust the stored profile over time; for example, as user responses improve, the profile may reflect faster response times.

In at least one embodiment, the processor 102 may alert a remote party such as ground control personnel via a wireless communication device 112. Alternatively, or in addition, the processor 102 may render the determination of situational awareness on a display 114. For example, in a training scenario, an instructor may continuously monitor situational awareness on the display 114.

In at least one embodiment, the processor 102 transfers the stored eye tracking data and other correlated system and task data to an offline storage device for later analysis and correlation to historic data and other outside factors such as crew rest, crew sleet rhythms, flight schedules, etc. Such transfer may be in real time via the wireless communication device 112.

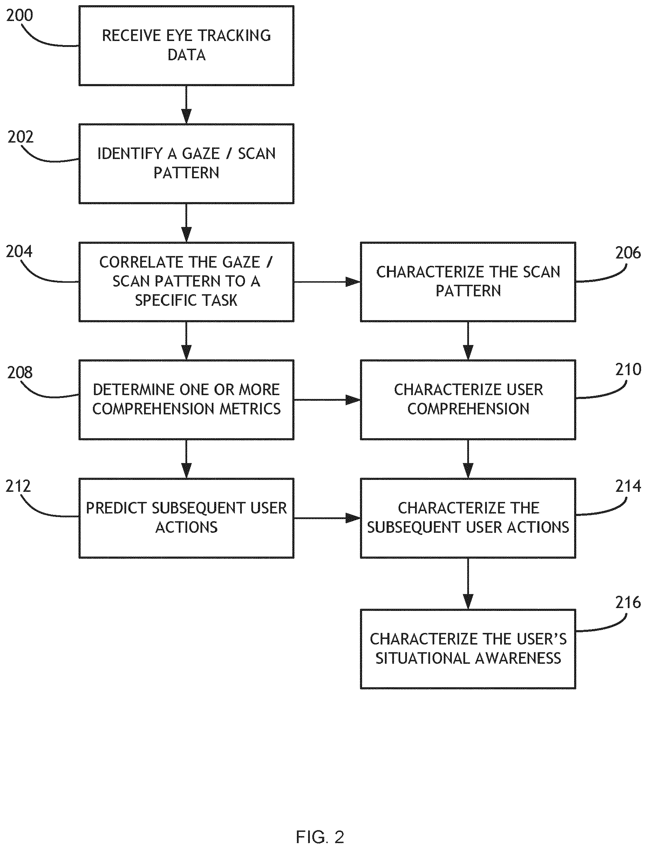

Referring to FIG. 2, a flowchart of an exemplary embodiment of the inventive concepts disclosed herein is shown. A computer system implementing embodiments of the inventive concepts disclosed herein receives 200 an image stream corresponding to eye tracking data from one or more vision-based sensors. A gaze or scan pattern is identified 202 from the eye tracking data. The gaze or scan pattern is correlated 204 to a specific flight task or an individual duty schedule of the user / pilot, and user's actual gaze is characterized 206 with respect to the specific flight task or an individual duty schedule. Such characterization may be weighted according to identified data or stimuli from one or more avionics instruments. For example, where the scan pattern includes a radar, the scan pattern may be weighted more or less to the radar depending of the number of targets of interest.

In at least one embodiment, the computer system may determine 208 one or more comprehension metrics from the eye tracking data. Comprehension metrics may be defined by gaze time (minimum and / or maximum), pupil dynamics (changes in pupil size), eye lid position, or the like. Furthermore, comprehension may be defined sequential actions of the user. In any case, comprehension metrics are characterized 210 with respect to predefined thresholds defined by past user performance, expert performance on similar tasks under similar stimuli, or absolute thresholds.

In at least one embodiment, the computer system may predict 212 subsequent user actions and characterize 214 the user's execution with respect to those predicted actions. Predicted subsequent actions may be based on the characterizations of the scan pattern and the user's comprehension, and on predefined subsequent steps. Alternatively, or in addition, predicted subsequent actions may be based on user response to stimuli; for example, where the computer system registers a user action to a prior step in a task (navigation change, change to a radar system, change to a comm system, or the like), the computer system may predict 212 subsequent actions based on those changes (e.g., a return to the original flight plan or implementation of a new flight plan; increased periodic scanning of a radar; increased use of the comm system). In any case, the computer system may apply certain time threshold or weighting to those predictions.

In at least one embodiment, the computer system may characterize 216 the user's situational awareness base on the characterization of the scan pattern, comprehension, and conformity with subsequent predictions. Such situational awareness can be communicated to a controller or trainer, or may trigger some remedial action if it falls below a predefined threshold.

Embodiments of the inventive concepts disclosed herein are critical to enabling reduced crew or single pilot operations, and will provide independent measures necessary to facilitate reduced crew in the cockpit by providing a means to identify when crew members are unable to continue safe flight and notify relief crew or activate automation. Furthermore, a training application may utilize embodiments of the inventive concepts to compare the small involuntary eye movements of a pilot-in-training to previously characterized professional pilot data patterns. Improved methods of assessing an operator's ability to acquire and maintain situation awareness is important for training. As such, it can serve as enabling technologies for single pilot operations or reduced crew operations.

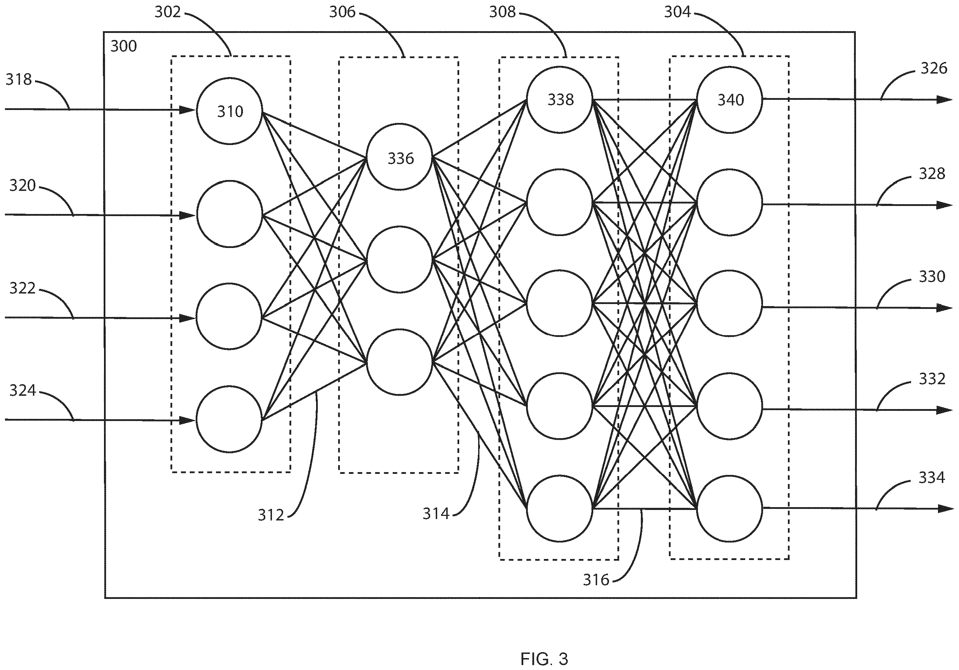

Referring to FIG. 3, a block diagram of a neural network 300 according an exemplary embodiment of the inventive concepts disclosed herein is shown. The neural network 300 comprises an input layer 302 that receives external inputs (including eye tracking data, avionics data, and potentially user or task specific profiles), an output layer 304, and a plurality of internal layers 306, 308. Each layer comprises a plurality of neurons or nodes 310, 336, 338, 340. In the input layer 302, each node 310 receives one or more inputs 318, 320, 322, 324 corresponding to a digital signal and produces an output 312 based on an activation function unique to each node 310 in the input layer 302. An activation function may be a Hyperbolic tangent function, a linear output function, and / or a logistic function, or some combination thereof, and different nodes 310, 336, 338, 340 may utilize different types of activation functions. In at least one embodiment, such activation function comprises the sum of each input multiplied by a synaptic weight. The output 312 may comprise a real value with a defined range or a Boolean value if the activation function surpasses a defined threshold. Such ranges and thresholds may be defined during a training process. Furthermore, the synaptic weights are determined during the training process.

Outputs 312 from each of the nodes 310 in the input layer 302 are passed to each node 336 in a first intermediate layer 306. The process continues through any number of intermediate layers 306, 308 with each intermediate layer node 336, 338 having a unique set of synaptic weights corresponding to each input 312, 314 from the previous intermediate layer 306, 308. It is envisioned that certain intermediate layer nodes 336, 338 may produce a real value with a range while other intermediated layer nodes 336, 338 may produce a Boolean value. Furthermore, it is envisioned that certain intermediate layer nodes 336, 338 may utilize a weighted input summation methodology while others utilize a weighted input product methodology. It is further envisioned that synaptic weight may correspond to bit shifting of the corresponding inputs 312, 314, 316.

An output layer 304 including one or more output nodes 340 receives the outputs 316 from each of the nodes 338 in the previous intermediate layer 308. Each output node 340 produces a final output 326, 328, 330, 332, 334 via processing the previous layer inputs 316, the final output 326, 328, 330, 332, 334 corresponding to a characterization of user gaze and pupil dynamics for perception, comprehension, projection, and situational awareness. Such outputs may comprise separate components of an interleaved input signal, bits for delivery to a register, or other digital output based on an input signal and DSP algorithm.

In at least one embodiment, each node 310, 336, 338, 340 in any layer 302, 306, 308, 304 may include a node weight to boost the output value of that node 310, 336, 338, 340 independent of the weighting applied to the output of that node 310, 336, 338, 340 in subsequent layers 304, 306, 308. It may be appreciated that certain synaptic weights may be zero to effectively isolate a node 310, 336, 338, 340 from an input 312, 314, 316, from one or more nodes 310, 336, 338 in a previous layer, or an initial input 318, 320, 322, 324.

In at least one embodiment, the number of processing layers 302, 304, 306, 308 may be constrained at a design phase based on a desired data throughput rate. Furthermore, multiple processors and multiple processing threads may facilitate simultaneous calculations of nodes 310, 336, 338, 340 within each processing layers 302, 304, 306, 308.

Layers 302, 304, 306, 308 may be organized in a feed forward architecture where nodes 310, 336, 338, 340 only receive inputs from the previous layer 302, 304, 306 and deliver outputs only to the immediately subsequent layer 304, 306, 308, or a recurrent architecture, or some combination thereof.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the broad scope of the inventive concepts disclosed herein or without sacrificing all of their material advantages; and individual features from various embodiments may be combined to arrive at other embodiments. The form herein before described being merely an explanatory embodiment thereof, it is the intention of the following claims to encompass and include such changes. Furthermore, any of the features disclosed in relation to any of the individual embodiments may be incorporated into any other embodiment.

## Claims

1. A computer apparatus comprising:
at least one eye tracking camera (108); and
at least one processor (102) in data communication with a memory (104) storing processor executable code; and
wherein the processor executable code configures the at least one processor to:
receive an image stream from the at least one eye tracking camera;
identify gaze and pupil dynamics from the image stream;
correlate the gaze and pupil dynamics with one or more stimuli; and
characterize the gaze and pupil dynamics based on conformity to scan pattern associated with the stimuli;
determine one or more comprehension metrics based on the gaze and pupil dynamics;
predict one or more subsequent actions; and
characterize a user's subsequent conformity with the predicted one or more subsequent actions.

2. The computer apparatus of Claim 1, wherein the processor executable code further configures the at least one processor to characterize the user's situational awareness based on the characterization of the gaze and pupil dynamics, comprehension metrics, and the user's subsequent conformity with the predicted one or more subsequent actions.

3. The computer apparatus of Claim 2, wherein the processor executable code further configures the at least one processor to execute a remedial action if situational awareness drops below a threshold.

4. The computer apparatus of Claim 1, wherein the predicted one or more subsequent actions are based on user responses to a prior stimulus.

5. The computer apparatus of Claim 4, wherein the predicted one or more subsequent actions include time-based thresholds.

6. The computer apparatus of Claim 1, wherein comprehension is defined by at least a maximum and a minimum gaze duration.

7. The computer apparatus of Claim 1, wherein the processor executable code further configures the at least one processor as a machine learning neural network.

8. A method comprising:
receiving an image stream from at least one eye tracking camera;
identifying gaze and pupil dynamics from the image stream;
correlating the gaze and pupil dynamics with one or more stimuli; and
characterizing the gaze and pupil dynamics based on conformity to scan pattern associated with the stimuli;
determining one or more comprehension metrics based on the gaze and pupil dynamics;
predicting one or more subsequent actions; and
characterizing a user's subsequent conformity with the predicted one or more subsequent actions.

9. The method of Claim 8, further comprising characterizing the user's situational awareness based on the characterization of the gaze and pupil dynamics, comprehension metrics, and the user's subsequent conformity with the predicted one or more subsequent actions.

10. The method of Claim 9, further comprising executing a remedial action if situational awareness drops below a threshold.

11. The method of Claim 8, wherein the predicted one or more subsequent actions are based on user responses to a prior stimulus.

12. The method of Claim 11, wherein the predicted one or more subsequent actions include time-based thresholds.

13. The method of Claim 8, wherein comprehension is defined by at least a maximum and a minimum gaze duration.

14. A pilot monitoring system comprising a computer apparatus as claimed in any of claims 1 to 7.
